# DEMANDE DE BREVET EUROPEEN

(11) **EP 1 220 404 A1**
(43) Date de publication de la demande: **03.07.2002**
(21) Numéro de dépôt: 01420243.6
(22) Date de dépôt: 26.12.2001
(51) Int. Cl.: H02G 3/30

(54) **Console pour le support d'un chemin de câbles ou analogues en treillis soudé**

(30) Priorité: 27.12.2000 FR 0017118
(71) Demandeur: Gewiss France SA, 21430 Liernais (FR)
(72) Inventeur: Bailleux, Jacques, 71400 Autun (FR)
(74) Mandataire: Myon, Gérard Jean-Pierre

(57) **Abrégé**

Cette console (6) est formée dans un flan de tôle et comporte une partie (5) de support du chemin de câbles. Des premier (11) et deuxième (10) organes de maintien latéral du chemin de câble sont formés dans le flan de tôle de manière à s'étendre vers le haut au-delà de la partie de support (5), chacun d'un côté de celle-ci, et comportent des moyens d'accrochage par déformation élastique (13, 14) sur les côtés du chemin de câble.

## Description

L'invention concerne une console pour le support d'un chemin de câbles ou analogues formé d'une succession de goulottes en treillis soudé, ainsi qu'un dispositif pour la réalisation d'un tel chemin et qui comporte cette console et une goulotte en treillis soudé.

Il est connu, par exemple du document FR-A-2 687 207, de réaliser un chemin de câbles en aboutant plusieurs goulottes en treillis soudé, assemblées au moyens d'éclisses. Ce chemin est généralement supporté soit par des équerres, soit par des consoles, qui peuvent être fixées directement au mur ou montées sur des barres verticales notamment pour faire cheminer plusieurs chemins les uns au dessus des autres. Afin de fixer les goulottes en treillis soudé sur les consoles ou les équerres, il est connu d'utiliser des boulons ou des pattes parfois dénommées "crapaud", dont on trouvera un exemple dans le document FR-B1-2 716 242.

Bien que ces chemins de câbles donnent pleine satisfaction à bien des égards, la Demanderesse n'a de cesse de les perfectionner.

En particulier, l'invention a pour but de réduire le coût global d'un chemin de câbles ou analogues formé d'une succession de goulottes en treillis soudé.

A cet effet, l'invention a pour objet une console pour le support d'un chemin de câbles ou analogues formé d'une succession de goulottes en treillis de fils de chaîne et de trame soudés ensemble, cette console étant formée dans un flan de tôle et comportant une partie de support du chemin de câbles, caractérisée en ce que des premier et deuxième organes de maintien latéral du chemin de câble sont formés dans le flan de tôle de manière à s'étendre vers le haut au-delà de la partie de support, chacun d'un côté de celle-ci, et comportent des moyens d'accrochage par déformation élastique sur les côtés du chemin de câble.

Selon d'autres caractéristiques avantageuses de cette console :
les moyens d'accrochage par déformation élastique comportent deux parties courbées dans deux directions opposées, chacune de ces deux parties étant formée dans l'un des organes de maintien latéral, pour recevoir un fil de chaîne ;

- les moyens d'accrochage par déformation élastique comportent deux gorges, chacune formée dans l'un des organes de maintien latéral pour recevoir un fil de chaîne, ces deux gorges étant parallèles entre elles et tournées dans deux directions opposées ;
- le flan de tôle comporte deux plis sensiblement verticaux, qui délimitent entre eux ladite partie de support et, au-delà d'eux, des première et deuxième ailes en regard, qui se terminent vers le haut respectivement par les premier et deuxième organes de maintien latéral, la première aile formant en outre embase de fixation de la console ;
- l'embase est percée d'au moins un trou pour le passage d'une vis de fixation de la console sur un support ;
- en face du trou percé dans l'embase, la deuxième aile comporte une échancrure pour le passage d'un outil dirigé vers ce trou ;
- le premier organe de maintien latéral est déporté, par rapport à l'embase, vers le deuxième organe de maintien latéral ;
- les gorges sont tournées vers l'extérieur de la console ;
- les gorges sont tournées vers l'intérieur de la console.

L'invention a également pour objet un dispositif pour la réalisation d'un chemin de câbles ou analogues, ce dispositif comportant au moins une console et une goulotte en treillis soudé comportant un fond, des premier et deuxième côtés, des fils de trame et, soudés à ceux-ci, des premier, deuxième et troisième fils de chaîne faisant partie respectivement du fond, du premier côté et du deuxième côté, caractérisé en ce que la console est telle que définie précédemment, ses organes de maintien latéral pouvant être insérés par déformation élastique entre les deuxième et troisième fils de chaîne pour retenir ceux-ci, le premier fil de chaîne portant alors sur la partie de support.

L'invention a également pour objet un dispositif pour la réalisation d'un chemin de câbles ou analogues, ce dispositif comportant au moins une console et une goulotte en treillis soudé comportant un fond, des premier et deuxième côté, des fils de trame et, soudés à ceux-ci, au moins des premier, deuxième et troisième fils de chaîne faisant partie respectivement du fond, du premier côté et du deuxième côté, caractérisé en ce que la console est telle que définie précédemment, les deuxième et troisième fils de chaîne pouvant être insérés par déformation élastique entre les organes de maintien latéral pour être retenus par ceux-ci, le premier fil de chaîne portant alors sur la partie de support.

L'invention sera bien comprise à la lecture de la description qui va suivre, donnée uniquement à titre d'exemple et faite en se référant aux dessins annexés, dans lesquels :
- la figure 1 est une vue en perspective d'une console conforme à l'invention ;
- la figure 2 est une vue en perspective d'un dispositif conforme à l'invention comportant une goulotte en treillis soudé, partiellement représentée du fait de sa longueur réelle, et, montée sur celle-ci, la console de la figure 1 ;
- la figure 3 est une vue en élévation du dispositif de la figure 2 ; et
- la figure 4 est une vue analogue à celle de la figure 3 et représente un dispositif selon une variante de réalisation de l'invention.

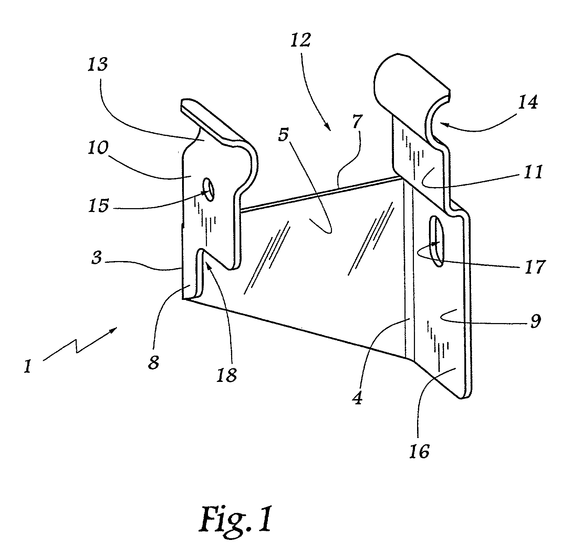

Une console 1 conforme à l'invention est représentée à la figure 1 dans sa position de support d'un chemin de câbles ou analogues.

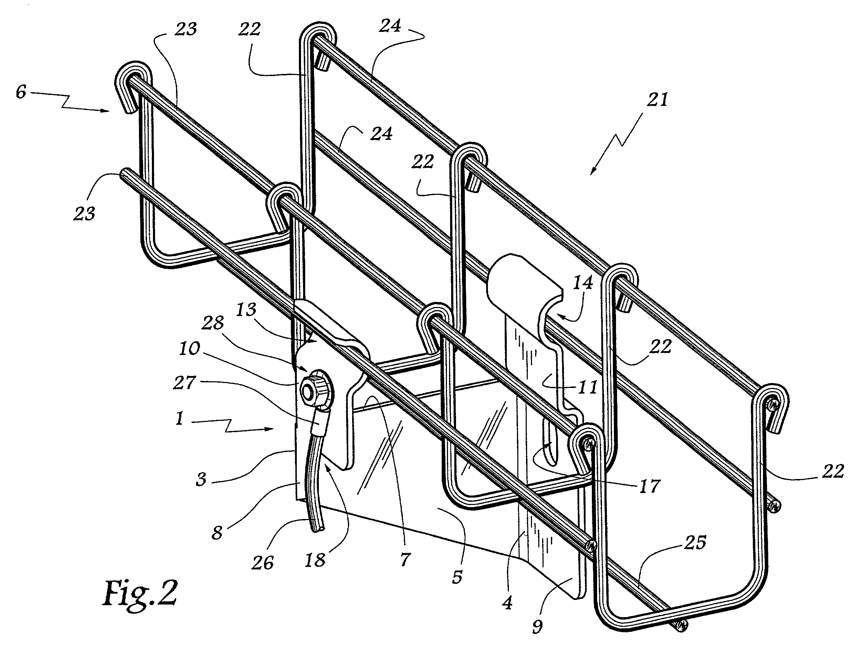

Cette console 1 est une pièce d'un seul tenant, obtenue par formage d'un flan de tôle. Deux plis verticaux 3 et 4 sont formés dans celui-ci de manière à ce que la console 1 ait globalement la forme d'un U, dont la partie centrale 5, trapézoïdale, forme support pour une goulotte en treillis soudé 6, visible sur les figures 2 à 4 et destinée à reposer sur le bord supérieur 7 de cette partie de support 5.

Au-delà des plis 3 et 4, une aile courte 8 et une aile longue 9, parallèles entre elles et en regard, s'étendent à angle droit respectivement à partir des extrémités étroite et large de la partie de support 5. Les portions supérieures de ces ailes 8 et 9, qui dépassent vers le haut du bord 7, forment deux pattes 10 et 11 de maintien latéral de la goulotte 6. Ces pattes sensiblement parallèles 10 et 11, qui s'étendent vers le haut, chacune d'un côté du bord 7, délimitent avec celui-ci un passage 12 de section globalement en forme de U.

Deux gorges parallèles et horizontales 13 et 14, formées à la même hauteur, chacune dans l'une des pattes 10 et 11, sont tournées vers l'extérieur du passage 12.

La patte 10 est en outre percée d'un trou circulaire 15 pour le passage de la tige d'un boulon de fixation d'un câble de terre.

La portion de l'aile 9 située en dessous de la patte 11 forme une embase 16 de fixation de la console 1 sur un support, et elle est percée à cet effet d'une lumière oblongue 17, dirigée verticalement et destinée au passage de la tige d'une vis non représentée de fixation de la console 1. En face de la lumière 17, l'aile 8 comporte une échancrure 18 pour le passage d'un outil, tel qu'un tourne-vis, en prise avec la tête de cette vis de fixation de la console 1.

La patte 11 est décalée par rapport à l'embase 16, en direction de la patte 10 au moyen d'un décrochement. Une fois montée sur la console 1, la goulotte 6 est de ce fait déportée à l'écart du mur ou du support sur lequel est fixée l'embase 16, ce qui facilite en particulier la mise en place sur cette goulotte 6 d'un couvercle non représenté.

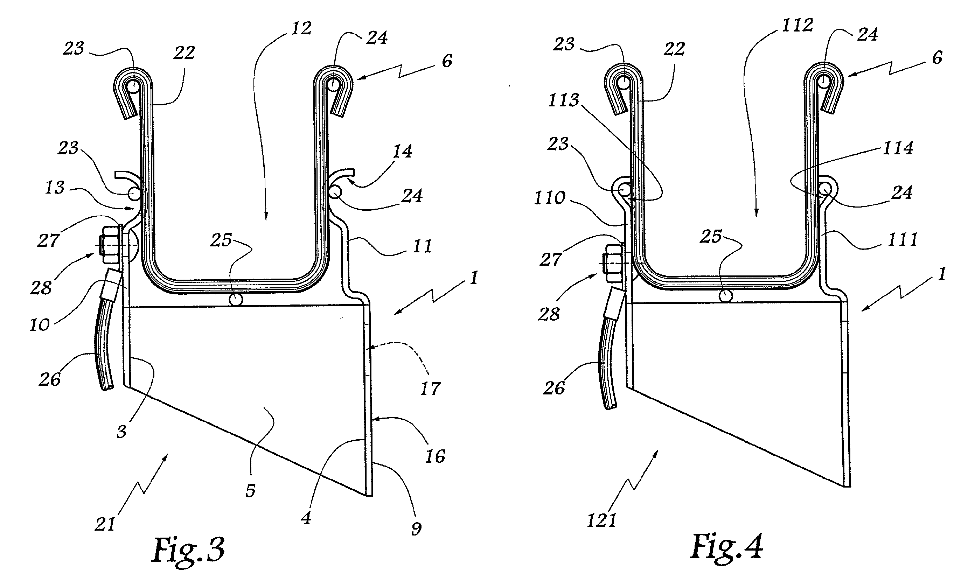

Le dispositif 21 des figures 2 et 3 comporte une console 1 et une goulotte 6 qui est encliquetée sur cette console 1. Au sens de l'invention, le terme encliquetage désigne un accrochage ou enchâssement obtenu par déformation puis rappel élastique.

La goulotte 6, qui est connue en soi, est formée d'un treillis de fils métalliques de chaîne et de trame soudés en un ensemble rigide. Les fils de trame 22 ont globalement la forme d'un U dont les branches font parties de deux côtés de la goulotte 6 et dont la base fait partie quant à elle d'un fond de celle-ci.

Les fils de chaîne sont rectilignes et dirigés selon la longueur de la goulotte 6. On repère par la référence 23 ceux de ces fils de chaîne qui s'étendent le long d'un côté de la goulotte 6, par la référence 24 ceux de ces fils de chaîne qui s'étendent le long de l'autre côté de cette goulotte 6, et par la référence 25 un fil de chaîne s'étendant le long du fond de celle-ci.

Les pattes 10 et 11 ont été insérées entre deux fils de chaîne 23 et 24 par déformation élastique de ces pattes 10 et 11 et/ou de ces fils de chaîne 23 et 24 respectivement reçus dans les gorges 10 et 11. Elles maintiennent latéralement la goulotte 11 que les gorges 13 et 14 formant moyen d'accrochage par déformation élastique empêchent de s'échapper du fait de la partie courbée qui termine chacune d'elles vers le haut.

Le fil de chaîne 25, qui repose alors sur le bord supérieur 7 transmet à la partie du support 5 l'essentiel du poids du chemin de câble et de son contenu, non représenté, les gorges 13 et 14 ne prenant en charge qu'une faible portion de ce poids.

Notamment lorsque le chemin de câble est destiné à recevoir des câbles électriques, il peut être relié à la terre au moyen d'un câble 26 dont une extrémité est pourvue d'une cosse 27. Cette dernière est fixée sur la console 1 au moyen d'un boulon 28 dont la vis est enfilée dans le trou 15.

Le dispositif 121 représenté à la figure 4 comporte une goulotte 6 et une console 101 selon une variante de réalisation de l'invention. Les éléments de cette console 101 sont repérés par les références des éléments analogues du mode de réalisation précédent, augmentées de 100. Les gorges 113 et 114 de la console 101 sont toujours tournées dans deux directions opposées, mais l'une vers l'autre et non plus vers l'extérieur du passage 112, comme c'est le cas dans le mode de réalisation décrit précédemment. Cette fois ci, c'est donc la goulotte 6 qui est encliquetée entre les pattes 110 et 111 et non plus l'inverse.

L'invention permet d'atteindre l'objectif mentionné en préambule. Tout d'abord, elle permet d'économiser les pièces nécessaires pour fixer les chemins de câble sur les supports de l'art antérieur.

De plus, les coûts de gestion et de stockage par le fabricant, les vendeurs et les poseurs de ces pièces de fixation éliminées grâce à l'invention sont également supprimés.

En outre, l'accrochage par déformation élastique du chemin de câble sur les consoles est simple et rapide, et elle conduit à une réduction du temps de pose, qui se traduit par une nouvelle économie.

Certaines caractéristiques additionnelles conduisent également à des économies. En particulier, la forme de la console 1 lui confère une grande robustesse, tout en la rendant simple à fabriquer et de ce fait peu coûteuse ; cette console 1 ne requiert en outre que peu de matière pour sa réalisation.

## Revendications

1. Console pour le support d'un chemin de câbles ou analogues formé d'une succession de goulottes (6) en treillis de fils de chaîne et de trame soudés ensemble, cette console étant formée dans un flan de tôle et comportant une partie (5) de support du chemin de câbles, **caractérisée en ce que** des premier (11 ; 111) et deuxième (10 ; 110) organes de maintien latéral du chemin de câble sont formés dans le flan de tôle de manière à s'étendre vers le haut au-delà de la partie de support (5), chacun d'un côté de celle-ci, et comportent des moyens d'accrochage par déformation élastique (13, 14 ; 113, 114) sur les côtés du chemin de câble.

2. Console selon la revendication 1, **caractérisée en ce que** les moyens d'accrochage par déformation élastique (13, 14 ; 113, 114) comportent deux parties courbées dans deux directions opposées, chacune de ces deux parties étant formée dans l'un des organes de maintien latéral (10, 11 ; 110, 111), pour recevoir un fil de chaîne (23, 24).

3. Console selon la revendication 1 ou 2, **caractérisée en ce que** les moyens d'accrochage par déformation élastique comportent deux gorges (13, 14 ; 113, 114), chacune formée dans l'un des organes de maintien latéral (10, 11 ; 110, 111) pour recevoir un fil de chaîne (23, 24), ces deux gorges (13, 14 ; 113, 114) étant parallèles entre elles et tournées dans deux directions opposées.

4. Console selon l'une quelconque des revendications précédentes, **caractérisée en ce que** le flan de tôle comporte deux plis sensiblement verticaux (3, 4), qui délimitent entre eux ladite partie de support (5) et, au-delà d'eux, des première (9) et deuxième (8) ailes en regard, qui se terminent vers le haut respectivement par les premier (11 ; 111) et deuxième (10 ; 110) organes de maintien latéral, la première aile (9) formant en outre embase (16) de fixation de la console.

5. Console selon la revendication 4, **caractérisée en ce que** l'embase (16) est percée d'au moins un trou (17) pour le passage d'une vis de fixation de la console sur un support.

6. Console selon la revendication 5, **caractérisée en ce qu'**en face du trou (17) percé dans l'embase (16), la deuxième aile (8) comporte une échancrure (18) pour le passage d'un outil dirigé vers ce trou (17).

7. Console selon l'une quelconque des revendications 4 à 6, **caractérisée en ce que** le premier organe de maintien latéral (11) est déporté, par rapport à l'embase (16), vers le deuxième organe de maintien latéral (10).

8. Console selon la revendication 3, **caractérisée en ce que** les gorges (13, 14) sont tournées vers l'extérieur de la console.

9. Console selon la revendication 3, **caractérisée en ce que** les gorges (13, 14) sont tournées vers l'intérieur de la console.

10. Dispositif pour la réalisation d'un chemin de câbles ou analogues, ce dispositif comportant au moins une console et une goulotte en treillis soudé (6) comportant un fond, des premier et deuxième côtés, des fils de trame (22) et, soudés à ceux-ci, des premier (25), deuxième (24) et troisième (23) fils de chaîne faisant partie respectivement du fond, du premier côté et du deuxième côté, **caractérisé en ce que** la console (1) est conforme à l'une quelconque des revendications 1 à 8, ses organes de maintien latéral (11, 10) pouvant être insérés par déformation élastique entre les deuxième (24) et troisième (23) fils de chaîne pour retenir ceux-ci, le premier fil de chaîne (25) portant alors sur la partie de support (5).

11. Dispositif pour la réalisation d'un chemin de câbles ou analogues, ce dispositif comportant au moins une console et une goulotte en treillis soudé (6) comportant un fond, des premier et deuxième côté, des fils de trame (22) et, soudés à ceux-ci, au moins des premier (25), deuxième (24) et troisième (23) fils de chaîne faisant partie respectivement du fond, du premier côté et du deuxième côté, **caractérisé en ce que** la console (101) est conforme à l'une quelconque des revendications 1 à 7, les deuxième (24) et troisième (23) fils de chaîne pouvant être insérés par déformation élastique entre les organes de maintien latéral (111, 110) pour être retenus par ceux-ci, le premier fil de chaîne (25) portant alors sur la partie de support (5).
